# EUROPÄISCHE PATENTANMELDUNG

(11) **EP 1 398 548 A2**
(43) Veröffentlichungstag der Anmeldung: **17.03.2004**
(21) Anmeldenummer: 03015409.0
(22) Anmeldetag: 09.07.2003
(51) Int. Cl.: F16J 15/32

(54) **Dichtring**

(30) Priorität: 14.09.2002 DE 10242847
(71) Anmelder: Carl Freudenberg KG, 69469 Weinheim (DE)
(72) Erfinder: Weiss, Britta, 69509 Mörlenbach (DE); Stadler, Rolf, 64646 Heppenheim (DE)

(57) **Zusammenfassung**

Dichtring, umfassend einen Stützring (1), der mit einem Lippenring (2) aus elastomerem Werkstoff verbunden ist. Der Stützring (1) besteht aus einem Harz.

## Beschreibung

Die Erfindung betrifft einen Dichtring, umfassend einen Stützring, der mit einem Lippenring aus elastomerem Werkstoff verbunden ist.

### Stand der Technik

Solche Dichtringe sind allgemein bekannt, wobei der Stützring beispielsweise aus einem metallischen Werkstoff besteht. Zur Herstellung des Dichtrings ist zunächst eine Entfettung mit einer anschließenden Phosphatierung des aus einem metallischem Werkstoff bestehenden Stützrings erforderlich. Anschließend wird die Oberfläche des Stützrings mit einem Haftvermittler beschichtet, um eine Anbindung des elastomeren Werkstoffs des Lippenrings zu gewährleisten.

### Darstellung der Erfindung

Der Erfindung liegt die Aufgabe zugrunde, einen Dichtring der eingangs genannten Art derart weiterzuentwickeln, dass dieser einfacher und kostengünstiger herstellbar sowie leichter ist und dass es eines Korrosionsschutzes sowie einer aufwendigen Metallteileherstellung für den Stützring nicht mehr bedarf.

Diese Aufgabe wird erfindungsgemäß durch die Merkmale der Ansprüche 1 und 4 und gelöst. Auf vorteilhafte Ausgestaltungen nehmen die darauf jeweils rückbezogenen Ansprüche Bezug.

Zur Lösung der Aufgabe ist es vorgesehen, dass der Stützring aus einem Harz besteht. Beispielsweise kann ein Epoxidharz zur Anwendung gelangen. Durch die Verwendung von Harz zur Herstellung des Stützrings ist von Vorteil, dass sich jede beliebige Form des Stützrings problemlos herstellen läßt, auch dann, wenn sie beispielsweise Hinterschneidungen aufweist. Harz wird im fliessfähigen Zustand in eine Werkzeugkavität eingebracht, füllt diese Werkzeugkavität vollständig aus, und nach der Verfestigung des Harzes liegt der gebrauchsfertige Stützring vor. Eine weitere Alternative besteht in der Verwendung von bereits vorgefertigten Harz-Formrohlingen, die in die Kavität eingelegt werden. Die Harz-Formrohlinge können beispielsweise spanabhebend hergestellt sein.

Im Gegensatz zu Stützringen aus metallischen Werkstoffen bedarf es bei Verwendung von Stützringen aus Harz keiner zusätzlichen, aufwendigen und kostenintensiven Arbeitsgänge zur Vorbehandlung; die Anbindung des elastomeren Werkstoffs des Lippenrings an den Stützring erfolgt ohne vorherige Entfettung des Stützrings, dessen Phosphatierung und/oder die Aufbringung eines Haftvermittlers auf den Stützring.

Der Stützring und der Lippenring können bevorzugt durch Vulkanisation stoffschlüssig verbunden sein. Dadurch ergibt sich eine unlösbare Verbindung von Stützring und Lippenring aneinander, die herstellungsbedingt ist. Davon abweichend besteht auch die Möglichkeit, den Lippenring zunächst zu vulkanisieren und anschließend, beispielsweise durch eine Verklebung, mit dem Stützring zu verbinden.

Der Stützring und der Lippenring können demgegenüber auch ungehaftet miteinander verbunden sein, wobei der Stützring und der Lippenring bevorzugt einschnappbar miteinander verbunden sind. Das sortenreine Recycling derartiger Dichtringe ist dadurch vereinfacht.

Die Herstellung und Bearbeitung der zuvor beschriebenen Stützringe erfordert nur ein vergleichsweise geringes Know-How, und die Stützringe aus Harz sind korrosionsfrei und haben, im Vergleich zu Stützringen aus metallischen Werkstoffen, eine geringere Masse, was speziell für Anwendungsfälle, in denen es auf eine geringe Trägheitsmasse ankommt, von hervorzuhebendem Vorteil ist.

Außerdem betrifft die Erfindung ein Verfahren zur Herstellung eines Dichtrings, wobei in einem ersten Verfahrensschritt in ein Werkzeug Harz in eine 1. Kavität zur Herstellung des Stützrings eingebracht und anschließend verfestigt wird, wobei in einem 2. Verfahrensschritt in das Werkzeug elastomerer Werkstoff in eine 2. Kavität zur Herstellung des Lippenrings eingebracht und an den Stützring angespritzt wird und wobei der gebrauchsfertige Dichtring in einem 3. Verfahrensschrift nach der Verfestigung des elastomeren Werkstoffs des Lippenrings und dessen Anbindung an den Stützring aus Harz aus dem Werkzeug entnommen wird. Durch dieses Herstellungsverfahren ist die Stützringherstellung mit der Lippenring-Formgebung verknüpft; der gesamte Dichtring wird in nur einem Werkzeug hergestellt.

Desweiteren betrifft die Erfindung ein Verfahren zur Herstellung eines Dichtrings, wobei in einem ersten Verfahrensschritt in ein erstes Werkzeug Harz in eine erste Kavität zur Herstellung des Stützrings eingebracht und anschließend verfestigt wird, wobei der verfestigte Stützring in einem zweiten Verfahrensschritt in ein zweites Werkzeug eingelegt wird, wobei in einem dritten Verfahrensschritt in das zweite Werkzeug elastomerer Werkstoff in eine zweite Kavität zur Herstellung des Lippenrings eingebracht und an den Stützring angespritzt wird und wobei der gebrauchsfertige Dichtring in einem vierten Verfahrensschritt, nach der Verfestigung des elastomeren Werkstoffs des Lippenrings und dessen Anbindung an den Stützring aus Harz aus dem zweiten Werkzeug entnommen wird.

Der erfindungsgemäße Dichtring ist einfach herstellbar, weist eine große Stabilität und eine ausreichend gute chemische Beständigkeit gegen die meisten abzudichtenden Medien auf, hat eine große Formbeständigkeit und - genauigkeit und läßt sich einfach auch dort lagern, wo eine hohe Luftfeuchtigkeit herrscht, da der aus Harz bestehende Stützring nicht hygroskopisch ist.

### Kurzbeschreibung der Zeichnung

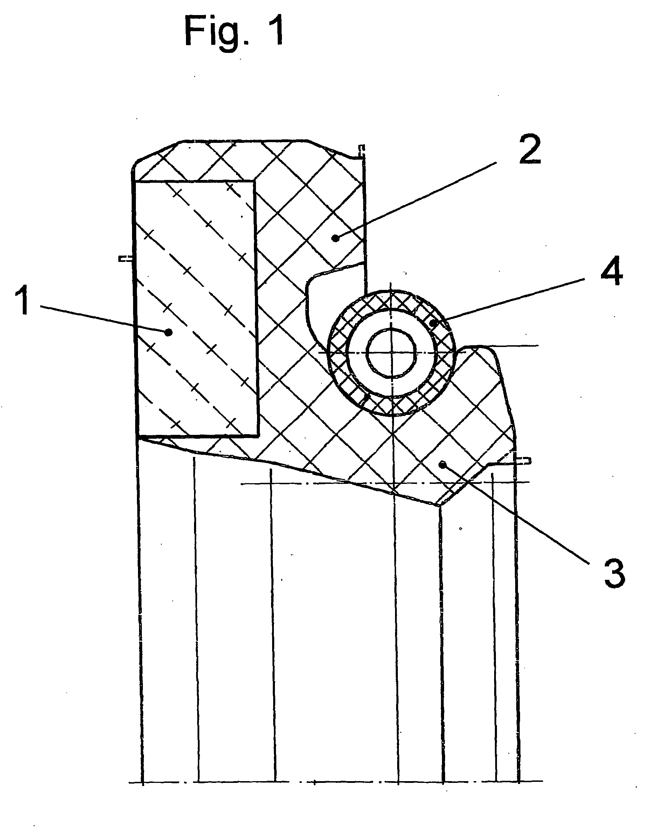

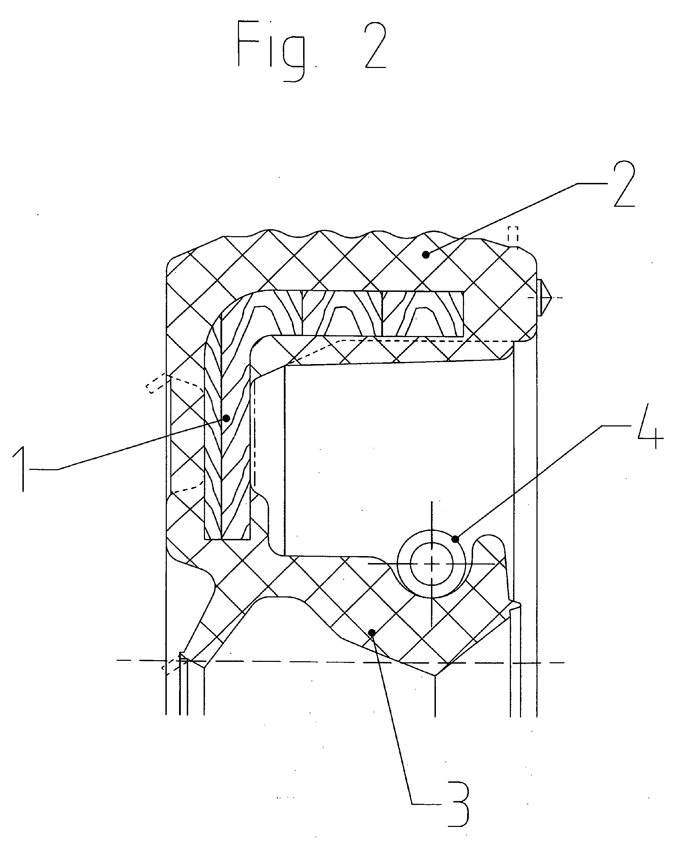

Zwei Ausführungsbeispiele eines erfindungsgemäßen Dichtrings werden nachfolgend anhand der Fig. 1 und Fig. 2 näher beschrieben:

Diese zeigen:
- Fig.1: ein erstes Ausführungsbeispiel eines Dichtrings, bei dem ein kreisringförmiger Stützring zur Anwendung gelangt,
- Fig. 2: ein zweites Ausführungsbeispiel ähnlich dem Ausführungsbeispiel aus Fig. 1, wobei der Stützring winkelförmig ausgebildet ist.

### Ausführung der Erfindung

In Fig. 1 ist ein erstes Ausführungsbeispiel eines erfindungsgemäßen Dichtrings gezeigt. Der Dichtring umfaßt einen kreisringförmigen Stützring 1, der aus Epoxidharz besteht. Der Lippenring 2 besteht aus einem elastomeren Werkstoff und weist in diesem Ausführungsbeispiel eine Dichtlippe 3 auf, die durch eine Ringwendelfeder 4 in radialer Richtung nach innen an ein hier nicht dargestelltes Maschinenelement, beispielsweise eine Welle oder eine Stange, angepresst wird.

In Fig. 2 ist ein Ausführungsbeispiel ähnlich dem Ausführungsbeispiel aus Fig. 1 gezeigt, wobei der Stützring 1 ein winkelförmiges Profil aufweist. Auch in diesem Ausführungsbeispiel besteht der Stützring 1 aus Epoxidharz.

## Patentansprüche

1. Dichtring, umfassend einen Stützring, der mit einem Lippenring aus elastomerem Werkstoff verbunden ist, **dadurch gekennzeichnet, dass** der Stützring (1) aus einem Harz besteht.

2. Dichtring nach Anspruch 1, **dadurch gekennzeichnet, dass** der Stützring (1) aus Epoxidharz besteht.

3. Dichtring nach einem der Ansprüche 1 oder 2, **dadurch gekennzeichnet, dass** der Stützring (1) und der Lippenring (2) durch Vulkanisation stoffschlüssig verbunden sind.

4. Dichtring nach einem der Ansprüche 1 bis 3, **dadurch gekennzeichnet, dass** der Stützring (1) aus Harz durch Ur- oder Umformen herstellbar ist.

5. Verfahren zur Herstellung eines Dichtrings, wobei in einem 1. Verfahrensschritt in ein Werkzeug Harz in eine 1. Kavität zur Herstellung des Stützrings (1) eingebracht und anschließend verfestigt wird, wobei in einem 2. Verfahrensschritt in das Werkzeug elstomerer Werkstoff in eine 2. Kavität zur Herstellung des Lippenrings (2) eingebracht und an den Stützring (1) angespritzt wird und wobei der gebrauchsfertige Dichtring in einem 3. Verfahrensschritt, nach der Verfestigung des elastomeren Werkstoffs des Lippenrings (2) und dessen Anbindung an den Stützring (1) aus Harz, aus dem Werkzeug entnommen wird.

6. Verfahren zur Herstellung eines Dichtrings, wobei in einem 1. Verfahrensschritt in ein erstes Werkzeug Harz in eine erste Kavität zur Herstellung des Stützrings (1) eingebracht und anschließend verfestigt wird, wobei der verfestigte Stützring (1) in einem zweiten Verfahrensschritt in ein zweites Werkzeug eingelegt wird, wobei in einem dritten Verfahrensschritt in das zweite Werkzeug elastomerer Werkstoff in eine zweite Kavität zur Herstellung des Lippenrings (2) eingebracht und an den Stützring (1) eingespritzt wird und wobei der gebrauchsfertige Dichtring in einem vierten Verfahrensschritt, nach der Verfestigung des elastomeren Werkstoffs des Lippenrings (2) und dessen Anbindung an den Stützring (1) aus Harz, aus dem zweiten Werkzeug entnommen wird.
